## Europäisches Patentamt

## European Patent Office

## Office européen des brevets

(19)

(11) Veröffentlichungsnummer: **0 025 096**
**B1**

(12) ## EUROPÄISCHE PATENTSCHRIFT

(45) Veröffentlichungstag der Patentschrift:
21.05.86

(51) Int. Cl.⁴: **C 08 K 3/00, C 08 K 9/00,**
**C 08 L 83/04**

(21) Anmeldenummer: 80103949.6

(22) Anmeldetag: 10.07.80

(54) Hydrophobe Füllstoff-Mischung, Verfahren zu deren Herstellung und deren Verwendung.

(30) Priorität: 21.07.79 DE 2929587

(43) Veröffentlichungstag der Anmeldung:
18.03.81 Patentblatt 81/11

(45) Bekanntmachung des Hinweises auf die Patenterteilung:
21.05.86 Patentblatt 86/21

(84) Benannte Vertragsstaaten:
AT BE CH DE FR GB IT LI LU NL SE

(56) Entgegenhaltungen:
CH - A - 608 469
DE - A - 2 728 490
GB - A - 2 001 303

(73) Patentinhaber: Degussa Aktiengesellschaft,
Weissfrauenstrasse 9, D-6000 Frankfurt am Main 1 (DE)

(72) Erfinder: Ettlinger, Manfred, Dr., In der Gartei 19,
D-6458 Rodenbach (DE)
Erfinder: Müller, Karl-Hans, Dr., Robert-Koch-Strasse 17,
D-6454 Bruchköbel (DE)
Erfinder: Simon, Edgar, Bergstrasse 24,
D-6464 Freigericht 5 (DE)

LIBER, STOCKHOLM 1986

## Beschreibung

Die Erfindung betrifft eine hydrophobe Füllstoff-Mischung, ein Verfahren zu deren Herstellung und deren Verwendung als Füllstoff in RTV-Silikonkautschuk.

RTV-Silikonkautschukmassen werden im allgemeinen in zwei verschiedenen Typen von Reaktionssystemen hergestellt. Der erste allgemeine Typ ist das sogenannte Zweikomponenten-System, in welchem das vernetzende Element ein Alkylsilikat oder ein Alkoxysilan ist. Dieses System ist vor allem dadurch ausgezeichnet, daß es spontan vulkanisiert, wenn man Polymer, vernetzendes Element und Katalysator vermischt.

Der zweite allgemeine Typ ist das sogenannte Einkomponenten-System, bei welchem ein Polymer, ein vernetzendes Element und gegebenenfalls ein Katalysator in Abwesenheit von Feuchtigkeit miteinander vermischt werden. Diese Mischung vernetzt bei der anschließenden Berührung mit Feuchtigkeit, wobei in erster Linie die atmosphärische Feuchtigkeit angewandt wird (vgl. GB-PS 1 110 429).

Es ist bekannt, in Einkomponenten- oder Zweikomponenten-RTV-Silikonkautschukmassen gefällte Kieselsäure oder auf pyrogenem Wege hergestellte Kieselsäure als Füllstoff einzusetzen, wobei die Kieselsäuren gegebenenfalls mit linearen Siloxanen, cyclischen Siloxanen, Halosilanen, Silanolen oder Alkoxysilanen hydrophobiert worden sind (vgl. GB-PS 1 110 429).

Diese Füllstoffe weisen aber zum Teil Nachteile auf, die sich auf die Qualität der RTV-Silikonkautschukmasse negativ auswirken können. So ist es möglich, daß diese Füllstoffe eine niedere Standfestigkeit sowie eine ungenügende Lagerbeständigkeit der Silikonkautschukmischung ergeben und die ausgehärteten Silikonkautschukmassen unbefriedigende mechanische Eigenschaften zeigen.

Zudem bestehen bei der Verwendung der relativ leicht flüchtigen Hydrophobierungsmittel arbeitshygienische Bedenken.

Gegenstand der Erfindung ist eine hydrophobe Füllstoff-Mischung, bestehend im ungetemperten Zustand aus:

50 bis 85 Gew.-% auf pyrogenem Wege hergestellter Kieselsäure
5 bis 40 Gew.-%,vorzugsweise 5 bis 30 Gew.-% gefällter Kieselsäure
- 8 bis 30 Gew.-% Hydrophobierungsmittel
0,5 bis 5 Gew.-% Aluminiumoxid

Ein weiterer Gegenstand der Erfindung ist ein Verfahren zur Herstellung der hydrophoben Füllstoff-Mischung, welches dadurch gekennzeichnet ist, daß man 8 bis 30 Teile Hydrophobierungsmittel mit 5 bis 40 Teile gefällter Kieselsäure vermischt, 50 bis 85 Teile auf pyrogenem Wege hergestellte Kieselsäure hinzufügt, mischt, 0,5 bis 5,0 Teile Aluminiumoxid hinzufügt, mischt, die so erhaltene Mischung 0,5 bis 3 Stunden bei 250 bis 330° C tempert und das so erhaltene Produkt auf ein Schüttgewicht von 80 bis 150 g/l verdichtet.

Als Hydrophobierungsmittel können Organosiliziumverbindungen, wie z.B. Silikonöle, eingesetzt werden, welche aus linearen oder cyclischen Organopolysiloxanen bestehen. Die freien, nicht an Sauerstoff gebundenen Valenzen des Siliziums können mit organischen Gruppen oder Wasserstoff besetzt sein. Ihre Viskosität kann bei 20°C zwischen 3 und 1 000 mPa S, vorzugsweise zwischen 20 uns 500 mPa S liegen. In einer besonders bevorzugten Ausführungsform kann die Viskosität zwischen 20 und 100 mPa S liegen. Weitere Hydrophobierungsmittel im Sinne der Erfindung können Silikonöle, wie verzweigte oder/und lineare Dimethylpolysiloxane, mit einer kinematischen Viskosität von 5 - 3 000 cstks sein.

Die organischen Gruppen der Organopolysiloxane, welche gleich oder ungleich sein können, können Alkyl-, Alkenyl-, Aryl-, Aralkyl-, Alkaryl-, Cycloalkyl-, oder Cycloalkenylgruppen sein. Geeignete Gruppen sind z.B. Methyl-, Äthyl-, Propyl-, Phenyl-, Vinyl-, Allyl-, Cyclopentyl-, Cyclohexenyl- und Cyclohexylgruppen. Im allgemeinen werden jedoch Methyl- und/oder Phenylgruppen mit oder ohne einen Anteil an Vinylgruppen verwendet. Zu geeigneten Siloxanen gehören beispielsweise Hexamethylcyclotrisiloxan, Octamethylcyclotetrasiloxan, Tetramethyltetravinylcyclotetrasiloxan, Decamethylcyclopentasiloxan, Hexamethyldisiloxan, sym.-Tetramethyldivinylsiloxan, sym.-Trimethyltriphenylcyclotrisiloxan, Octamethyltrisiloxan, Decamethyltetrasiloxan, und andere lineare Diorganopolysiloxane, einschließlich Diorganopolysiloxane mit Hydroxyendgruppen, wie 1,7-Dihydroxyoctamethyltetrasiloxan, 1,9-Dihydroxydecamethylpentasiloxan und 1,11-Dihydroxy-duodecamethylhexasiloxan. Weitere verwendbare Siloxane sind 1,3,5,7-Tetramethyl-1,3,5,7-tetravinylcvclotetra-siloxan, Hexamethyldisiloxan, 1,3-Divinyl-1,1,3,3-Tetramethyldisiloxan und 1,3,5-Trimethyl-1,3,5-triphenylcyclo-trisiloxan.

Als gefällte Kieselsäure kann man Kieselsäure mit den folgenden physikalisch-chemischen Kenndaten verwenden:

BET-Oberfläche m$^2$/g 100 - 300
Mittlere Primärteilchengröße nm 7 - 18
Stampfdichte nach DIN 53 194 g/l 70 - 300
Trocknungsverlust nach DIN 55 921 % 2 - 6
Glühverlust nach DIN 55 921 % 4 - 8
pH-Wert nach DIN 53 200 5 - 7

Als auf pyrogenem Wege hergestellte Kieselsäure kann man Kieselsäure mit den folgenden physikalisch-chemischen Kenndaten verwenden:

BET-Oberfläche m$^2$/g 50 - 400
Mittlere Primärteilchengröße nm 7 - 40
Stampfdichte nach DIN 53 194 g/l 40 - 120

0 025 096

Trocknugsverlust nach DIN 55 921 % 1 - 2
Glühverlust nach DIN 55 921 % 1 - 2
pH-Wert nach DIN 53 200 3 - 5
Als Aluminiumoxid kann man ein auf pyrogenem Wege hergestelltes Aluminiumoxid verwenden.

Zum Vermischen der einzelnen Komponenten kann man vorteilhafterweise eime Schlagkreuzmühle verwenden. Man kann aber auch, wenn das Hydrophobierungsmittel niederviskos ist, einen Wirbelschicht-, Luftstrom-, Kreiseloder Schnecken-Mischer verwenden. Bei höher viskosen Hydrophobierungsmitteln können mit Vorteil Intensivmühlen eingesetzt werden.

Die Mischzeit kann bis zu 3 Minuten betragen.

Die Zugabe der auf pyrogenem Wege hergestellten Kieselsäure kann in einer beliebigen Anzahl, an Portionen je nach Art des verwendeten Mischgerätes durchgeführt werden.

Die Temperung des Mischproduktes kann bei einer Temperatur von 250 bis 330°C, vorzugsweise von 290 bis 310°C, durchgeführt werden.

Die Verdichtung kann mittels einer Kugelmühle, mittels Walzen, oder der bekannten Vakuummethode erfolgen.

Nach der Temperung und Verdichtung kann die erfindungsgemäße Füllstoff- Mischung die folgenden physikalischchemischen Kern daten aufweisen:

Trocknungsverlust (DIN 55 921) 0,1 bis 0,6 %
Glühverlust (DIN 55 921) 2,6 bis 3,9 %
pH-Wert (DIN 53 200) 6,0 bis 7,5 %
Methanolbenetzbarkeit 52 bis 60
Kohlenstoffgehalt 3,0 bis 4,0 %

Die Verwendung des nach dem erfindungsgemäßen Verfahren erhaltenen Füllstoffes in zu Elastomeren härtbaren Massen auf der Basis von Diorganopolysiloxanen ist ebenfalls Gegenstand der Erfindung.

Besonders vorteilhaft ist die Füllstoff-Mischung gemäß der Erfindung kn <u>Zweikomponentenpackungen</u> von bei Raumtemperatur vulkanisierenden Mischungen, die durch Vernetzung von flüssigen, endständige Silanolreste enthaltenden Diorganopolysiloxanen mit polyfunktionellen Vernetzungsmitteln vulkanisiert werden, zu verwenden. Die Füllstoff-Mischung ist erfindungsgemäß für diesen Zweck wertvoll, weil sie bei der Verwendung in Kombination mit dem endständige Silanolreste enthaltenden Polydiorganosiloxan weder eine wesentliche Verdickung der Flüssigkeit, noch eine "Strukturierung" oder Verfestigung hervorruft, wenn die Füllstoff-Mischung in höheren Anteilen eingemischt wird.

Als Diorganopolysiloxane können alle Diorganopolysiloxane verwendet werden, Die bisher als Grundlage für zur Organopolysiloxanelastomere bei Raumtemperatur (RTV) oder nur wenig erhöhter Temperatur (LTV) härtbaren bzw. härtenden Massen verwendet wurden bzw. verwendet werden konnten. Sie können z.B. durch die allgemeine Formel

$$Z_nSi(R)_{3-n}\text{-}O\text{-}[Si(R_2)]_x\ O\text{-}Si(R)_{3-n}\text{-}Z_n$$

wiedergegeben werden, worin R gleiche oder verschiedene, einwertige, gegebenenfalls substituierte und/oder polymere Kohlenwasserstoffreste, Z eine Hydroxygruppe, hydrolysierbare Gruppen und/oder ein hydrolysierbares Atom oder im Falle des Vorliegens von bei nur wenig erhöhter Temperatur härtbaren Massen Aikenylgruppen bedeuten, n 1,2 oder 3 und x eine ganze Zahl im Wert von mindestens 1 ist.

Innerhalb bzw. entlang der Siloxankette in der oben angegebenen Formel können, was in derartigen Formeln üblicherweise nicht dargestellt wird, auch andere meist nur als Verunreinigungen vorliegende Siloxaneinheiten als Diorganosiloxaneinheiten, z.B. solche der Formel $RSiO_{3/2}$, $R_,SiO_{1/2}$, und $SiO_{4/2}$, wobei R jeweils die oben dafür angegebene Bedeutung hat, vorhanden sien. Die Menge dieser anderen Siloxaneinheiten sollte 10 Molprozent nicht übersteigen.

Beispiele für Kohlenwasserstoffrest R sind Alkylreste, wie Methyl-, Äthyl-, Propyl-, Butyl-, Hexyl- und Octylreste; Alkenylreste, wie der Vinyl-, Allyl-, Äthylallyl- und Butadienylrest; und Arylreste, wie der Phenyl- und Tolylrest.

Beispiele für substituierte Kohlenwasserstoffreste R sind insbesondere halogenierte Kohlenwasserstoffreste, wie der 3,3,3-Trifluorpropylrest, Chlorphenyl- und Bromtolylrest; und Cyanalkylreste, wie der beta-Cyanäthylrest.

Beispiele für polymere (auch als "modifizierende" bezeichenbare) substituierte und unsubstituierte Kohlenwasserstoffrest R sind über Kohlenstoff an Silicium gebundene Polystyryl-, Polyvinylacetat-, Polyacrylat-, Polymethacrylatund Polyacrylnitrilreste.

Mindestens der überwiegende Teil der Reste R besteht vor allem wegen der leichteren Zugänglichkeit vorzugsweise aus Methylgruppen. Die gegebenenfalls vorhandenen übrigen Reste R sind insbesondere Vinyl- und/oder Phenylgruppen.

Insbesondere im Falle des Vorliegens von unter Ausschluß von Wasser lagerfähigen, bei Zutritt von Wasser bei Raumtemperatur zu Elastomeren härtenden Massen des Einkomponetensystems handelt es sich bei Z meist um hydrolysierbare Gruppen. Beispiele für solche Gruppen sind Amino-, Amido-, Aminoxy-, Oxim-, Alkoxy-, Alkoxyalkoxy-, (z.B. $CH_3OCH_2CH_2O$-), Alkenyloxy- (z.B. $H_2C=(CH_3)CO$-), Acyloxy- und Phosphatgruppen. Vor allem wegen der leichteren Zugänglichkeit sind als Z Acyloxygruppen, insbesondere Acetoxygruppen, bevorzugt. Es werden jedoch auch z.B. mit Oximgruppen, wie solchen der Formel $-ON=C(CH_3)\ (C_2H_5)$, als Z ausgezeichnete Ergebnisse erzielt.

Beispiele für hydrolysierbare Atome Z sind Halogen- und Wasserstoffatome.

Beispiele für Alkenylgruppen Z sind insbesondere Vinylgruppen.

3

Es können gleiche oder verschiedene Z an ein Si-Atom gebunden sein.

Von Vorteil ist, wenn u.a. als zu Elastomeren härtbare Massen solche vorliegen, die ohne Mitverwendung von Lösungsmitteln durch Vergießen oder Verstreichen verarbeitet werden können. Die Viskosität der im Rahmen der Erfindung verwendeten RTV-Diorganopolysiloxane sollte daher 5 000 000 cP bei 25°C, vorzugsweise 150 000 cP bei 25°C nicht übersteigen. Dementsprechend sollte der Wert von x vorzugsweise 40 000 nicht übersteigen.

Es können Gemische aus verschiedenen Diorganopolysiloxanen verwendet werden.

Aus den hydrophoben Füllstoffen gemäß Erfindung werden durch Vermischen mit Diorganopoiysiloxanen und gegebenenfalls weiteren Stoffen bei Raumtemperatur oder nur wenig erhöhter Temperatur, gegebenenfalls nach Zusatz von Vernetzungsmitteln, zu Eiastomeren härtbare Massen, insbesondere unter Ausschluß von Wasser lagerfähige, bei Zutritt von Wasser bei Raumtemperatur zu Elastomeren härtende Massen hergestellt. Dieses Vermischen kamn in beliebiger Weise, z.B. in mechanischen Mischgeräten, erfolgen. Es vollzieht sich sehr rasch und leicht, gleichgültig in welcher Reihenfolge der Zugabe der Mischungsbestandteile es durchgeführt wird.

Vorzugsweise wird die erfindungsgemäß verwendete Füllstoff-Mischung in Mengen von 5 bis 50 Gew.-%, vorzugsweise 5 bis 40 Gew.-%, bezogen auf das Gesamtgewicht der zu Elastomeren härtbaren Massen, eingesetzt.

Liegen in den reaktionsfähige endständige Einheiten enthaltenden Diorganopolysiloxanen als einzige reaktionsfähige endständige Einheiten soiche mit Si-gebundenen Hydroxylgruppen vor, so müssen diese Diorganopolysiloxane, um sie in an sich bekannter Weise zu härten bzw. um sie in durch das in der Luft enthaltende Wasser, gegebenenfalls unter Zugabe von weiterem Wasser, zu Elastomeren härtende Verbindungen zu überführen, mit Vernetzungsmittel, gegebenenfalls in Gegenwart eines Kondensationskatalysators in bekannter Weise umgesetzt werden.

Beispiele für Vernetzungsmittel sind insbesomdere Silane der allgemeinen Formel

$$R_{4-t}SiZ'_t,$$

worin R die oben dafür angegebene Bedeutung hat, Z eine hydrolysierbare Gruppe und/oder hydrolysierbares Atom und t 3 oder 4 ist. Die oben angeführten Beispiele für hydrolysierbare Gruppen Z und hydrolisierbare Atome Z gelten im vollen Umfang auch für die hydrolysierbaren Gruppen Z' und die hydrolysierbaren Atome Z'.

- Beispiele für Silane der oben angegebenen Formel sind Methyltriacetoxvsilane, Isopropyltriacetoxysilan, Isopropoxytriacetoxysilan, Vinyltriacetoxysilan, Methyltrisdiäthylaminooxysilan, Methvltris (-cyclohexylamino)-silan, Methyltris (-diäthylphosphato) -silan und Methyltris (-methyläthylketoximo)-silan.

Anstelle von oder im Gemisch mit Silanen der oben angegebenen Formel können ferner z.B. auch polysiloxane verwendet werden, die je Molekül mindestens 3 Z-Gruppen bzw. -Atome enthalten, wobei die nicht durch Z'-Gruppen bzw. -Atome abgesättigten Siliciumvalenzen durch Siloxansauerstoffatome und gegebenenfalls R-Gruppen abgesättigt sind. Die bekanntesten Beispiele für Vernetzer der letzteren Art sind das Polyäthylsilikat mit einem $SiO_2$-Gehalt von etwa 40 Gew.-%, Hexaäthoxydisiloxan und Methylwasserstoffpolysiloxane. Die bekanntesten Beispiele für Kondensationskatalysatoren sind Zinnsalze von Fettsäuren, wie Dibutylzinndiladrat, Dibutylzinndiacetat und Zinn(II)-octoat.

Liegen in den reaktionsfähige endständige Einheiten enthaltenden Diorganopolysiloxane als einzige reaktionsfähige endständige Einheiten solche mit Alkenylgruppen vor, so kann die Härtung zu Elastomeren in bekannter Weise mit Organopolysiloxanen, die durchschnittlich mindestens 3 Si-gebundene Wasserstoffatome je Molekül enthalten, wie Methylwasserstoffpolysiloxan, in Gegenwart von die Anlagerung von Alkenylgruppen an Si-gebundenen Wasserstoff fördernden Katalysatoren, wie Platin(IV)-chlorosäure, erfolgen. Es liegen dann bei Raumtemperatur oder nur wenio erhöhter Temperatur (meist 50 bis 80°C) härtbare (LTV) Massen vor.

Schließlich sei als weiteres Beispiel für die Härtung zu Elastomeren diejenigen mittels polycyclischer Organopolysiloxane in Gegenwart von Äquilibrierungskatalysatoren, wie Phosphornitrilchloriden, genannt.

Selbstverständlich können die zu Elastomeren härtbaren Massen außer Diorganopolysiloxanen, erfindungsgemäßen hydrophoben Füllstoff Vernetzungsmitteln und Vernetzungskatalysatoren, gegebenenfalls herkömmlicherweise meist oder häufig in zu Elastomeren härtbaren Massen verwendete Füllstoffe enthalten. Beispiele für solche Stoffe sind Füllstoffe mit einer Oberfläche unterhalb $50 m^2/g$, wie Quarzmehl, Diatomeenerde, ferner Zirkoniumsilikat und Calciumcarbonat, ferner unbehandeltes, naßgefälltes. Siliciumdioxyd, organische Harze, wie Polyvinylchloridpulver, Organopolysiloxanharze, faserige Füllstoffe, wie Asbest, Glasfasern und organische Fasern, pigmente, lösliche Farbstoffe, Duftstoffe, Korrosionsinhibitoren, die Massen gegen den Einfluß von Wasser stabilisierende Mittel, wie Essigsäureanhydrid, die Härtung verzögernde Mittel, wie Benzotriazol und Weichmacher, wie durch Trimethylsiloxygruppen endblockierte Dimethylpolysiloxane.

Das erfindungsgemäße Verfahren wird anhand der folgenden Beispiele näher erläutert und beschrieben:

**Beispiel**

a) 9 g Silikonöl werden mit 6 g der gefällten Kieselsäure in einem Becherglas vermischt. Zur Verbesserung der Fließfähigkeit rührt man noch 4 g auf pyrogenem Wege hergestellte Kieselsäure ein. Den Inhalt des Becherglases gibt man in einen Mischer und mischt 20-Sekunden. Anschließend fügt man nacheinander in drei gleichen Portionen insgesamt 50 g auf pyrogenem Wege hergestellte Kieselsäure zu, wobei nach jeder Zugabe 30 Sekunden homogenisiert wird. Danach wird noch 1 g Aluminiumoxid C zur Verminderung der elektrostatischen Aufladung zugesetzt und 5 Sekunden gemischt.

Die auf diesen Wege gewonmene Mischung wird 2 Stunden bei 300°C getempert. Das Produkt, das eine Schüttdichte von ca. 60 g/l hat, wird mit einer Kugelmühle auf 80 - 150 g/l verdichtet.

**Die Zusammensetzung des hydrophoben Füllstoffes beträgt:**
77,1 % auf pyrogenem Wege hergestellte Kieselsäure
8,6 % gefällte-Kieselsäure
12,9 % Silikonöl (Baysilon M 100)
1,4 % Aluminiumoxid

**Die physikalisch-chemischen Kenndaten der hydrophoben Füllstoff-Mischungen sind:**

| Füllstoff-Mischung | A | B | C | D |
|---|---|---|---|---|
| Trocknungsverlust (%) (DIN 55 921) | 0,4 | 0,5 | 0,3 | 0,2 |
| Glühverlust (%) (DIN 55 921) | 2,9 | 2,9 | 3,6 | 3,3 |
| pH-Wert (DIN 53 200) | 6,3 | 7,3 | 6,3 | 6,8 |
| Methanolbenetzbarkeit | 56,0 | 58,0 | 53,0 | 55,0 |
| Kohlenstoffgehalt (%) | 3,12 | 3,56 | 3,60 | 3,48 |

Als auf pyrogenem Wege hergestellte Kieselsäure wird für die Produkte A, B, C und D eine Kieselsäure mit den folgenden physikalisch-chemischen Kenndaten verwendet:
BET-Oberfläche $m^2/g$ 200
Mittlere Primärteilchengröße nm 12
Stampfdichte nach DIN 53 194 g/l ca. 50
Trocknungsverlust nach DIN 55 921 % < 1,5
Glühverlust nach DIN 55 921 % < 2
pH-Wert nach DIN 53 200 3,6 - 4,2
Für das Produkt A wird als gefällte Kieselsäure eine Kieselsäure mit den folgenden physikalisch-chemischen Kenndaten verwendet:
BET-Oberfläche $m^2/g$ 190

Mittlere Primärteilchengröße nm 18
Stampfdichte nach DIN 53 194 g/l 100
Trocknungsverlust nach DIN 55 921 % 6
Glühverlust nach DIN 55 921 % 5
pH-Wert nach DIN 53 200 6,3

Für das Produkt B wird als gefällte Kieselsäure eine Kieselsäure mit den folgenden physikalisch-chemischen Kenndaten verwendet:
BET-Oberfläche m²/g 190
Mittlere Primärteilchengröße nm 18
Stampfdichte nach DIN 53 194 g/l ca. 100
Trocknungsverlust nach DIN 55 921 % 6
Glühverlust nach DIN 55 921 % 5
pH-Wert nach DIN 53 200 6,3

Für das Produkt C wird als gefällte Kieselsäure eine Kieselsäure mit den folgenden physikalisch-chemischen Kenndaten verwendet:
BET-Oberfläche m²/g 170
Mittlere Primärteilchengröße nm 18
Stampfdichte nach DIN 53 194 g/l 70
Trocknungsverlust nach DIN 55 921 % 6
Glühverlust nach DIN 55 921 % 5
pH-Wert nach DIN 53 200 6,3

Für das produkt D wird als gefällte Kieselsäure eine Kieselsäure mit den folgenden physikalisch-chemischen Kenndaten verwendet:
BET-Oberfläche m²/g 160
Mittlere Primärteilchengröße nm 18
Stampfdichte nach DIN 53 194 g/l 60
Trocknungsverlust nach DIN 55 921 % 2,5
Glühverlust nach DIN 55 921 % 3,3
pH-Wert nach DIN 53 200 4,5

Das für die produkte A,B,C und D verwendete Silikonöl ist ein polydimethylsiloxan, welches durch Trimethylsilylgruppen terminiert ist und bei 20°C eine kinematische Viskosität von ca. 100 cstks aufweist (Baysilon M 100).

Das für die Produkte A,B,C und D verwendete Aluminiumoxid wird auf pyrogenem Wege hergestellt und weist die folgenden physikalisch-chemischen Kenndaten auf:
BET-Oberfläche m²/g 100
Mittlere Primärteilchengröße nm 20
Stampfdichte nach DIN 53 195 g/l ca. 60
Trocknungsverlust nach DIN 55 921 % < 5
Glühverlust nach DIN 55 921 % < 3
pH-Wert nach DIN 53 200 4 - 5

**Extrudierbarkeit der Massen nach 90 Tagen**

| Als Füllstoff verwendete hydrophobe Kieselsäure | A | B | C | D |
|---|---|---|---|---|
| Extrudierbarkeit (g/min) | 5,07 | 6,15 | 3,87 | 4,74 |

b) In einem Planetenmischer werden 270 g eines Polydimethylsiloxanes (Silopren E 50), das endständige Silanolgruppen und eine dyn. Viskosität von 50 000 mPas hat, mit 105 g eines Polydimethylsiloxans (Baysilon M 1000), das von Trimethylsilylgruppen terminiert ist und eine Viskosität von 1000 mPas besitzt und 25 g Methyltriacetoxysilan 3 Minuten unter Feuchtigkeitsausschluß vermischt.

Anschließend gibt man 100 g des gemäß Beispiel 1.a hergestellten hydrophoben Produktes zu und rührt 2 x 5 Minuten unter vermindestem Druck und Feuchtigkeitsauschluß. Danach setzt man 3 Tropfen Dibutylzinndiacetat zu und rührt nochmals 2 x 3 Minuten unter vermindertem Druck und Feuchtigkeitsausschluß. Es entsteht eine breiige Masse, die sich unter dem Einfluß von Luftfeuchtigkeit zum Elastomeren verfestigt.

**Extrudierbarkeit der Massen unmittelbar nach Herstellung**

| Als Füllstoff verwendete hydrophobe Kieselsäure | A | B | C | D |
|---|---|---|---|---|
| Extrudierbarkeit (g/min) | 5,33 | 6,77 | 5,02 | 4,70 |

**Mechanische Werte der ausgehärteten Elastomeren nach 8 Tagen Standzeit an der Luft**

| Als Füllstoff verwendete hydrophobe Kieselsäure | A | B | C | D |
|---|---|---|---|---|
| Standvermögen | gut | gut | gut | gut |
| Modul 100 $(N/mm^2)$ | 0,99 | 1,07 | 1,0 | 0,99 |
| Zugfestigkeit $(N/mm^2)$ | 3,18 | 3,00 | 2,78 | 2,85 |
| Bruchdehung | 350 | 304 | 332 | 334 |
| Weiterreißfestig-keit $(N/mm^2)$ | 16,73 | 15,32 | 15,53 | 15,77 |
| Shore-A-Härte | 36 | 35 | 34 | 37 |

7

**0 025 096**

**Mechanische Daten von Elastomeren, die mit hydrophoben Kieselsäuren hergestellt wurden, nach 8 Tagen Standzeit an der Luft**

| Als Füllstoff verwendete hydrophobe Kieselsäure | HDK H 2000 | Aerosil* R 972 | Kieselsäure D 17 |
|---|---|---|---|
| Standvermögen | gut | gut | mäßig |
| Modul 1000 $(N/mm^2)$ | 0,5 | 0,45 | 0,6 |
| Zugfestigkeit $(N/mm^2)$ | 2,5 | 1,5 | 3,2 |
| Bruchdehnung | 430 | 340 | 650 |
| Weiterreißfestigkeit $(N/mm)$ | 15 | 3,5 | 14 |
| Shore-A-Härte | 24 | 21 | 26 |

* Füllungsgrad beträgt nur 12 %

**0 025 096**

**Extrudierbarkeit der Elastomeren, die mit kommerziellen hydrophoben Kieselsäuren hergestellt wurde, unmittelbar nach der Herstellung**

| Als Füllstoff verwendete hydrophobe Kieselsäure | HDK H 2000 | Aerosil R 972 | Kieselsäure D 17 |
|---|---|---|---|
| Extrudierbarkeit (g/min) | 19 | 2,3 | 6 |

Die Extrudierbarkeit ändert sich während der Lagerung kaum.

Die verwendete hydrophobe Kieselsäure HDK H 2000 ist eine mit Hexamethyldisilazon hydrophobierte und verdichtete pyrogen hergestellte Kieselsäure und weist die folgenden physikalisch-chemischen Kenndaten auf:

**HDK H 2000**
BET-Oberfläche m$^2$/g 170
Mittlere Primärteilchengröße nm
-Stampfdichte nach DIN 53 194 g/l ca. 90
Trocknungsverlust nach DIN 55 921 % < 0,6
Glühverlust nach DIN 55 921 % < 2,6
pH-Wert nach DIN 53 200 6,7 - 7,7

Die verwendete hydrophobe Kieselsäure Aerosil R 972 ist eine mit Methylchlorsilanen hydrophobierte, pyrogen hergestellte Kieselsäure und weist die folgenden physikalischchemischen Kenndaten auf:

**Aerosil R 972**
BET-Oberfläche m /g 110
Mittlere Primärteilchengröße nm 16
Stampfdichte nach DIN 53 19q g/l ca. 50
Trocknunqsverlust nach DIN 55 921 % < 0,5
Glühverlust nach DIN 55 921 % < 2
pH-Wert nach DIN 53 200 3,5 - 4,1

Die verwendete hydrophobe Kieselsäure D 17 ist eine mit Methylchlorsilanen hydrophobierte, gefällte Kieselsäure und weist die folgenden physikalisch-chemischen Kenndaten auf:

**Kieselsäure D 17**
BET-Oberfläche m /g 110
Mittlere Primärteilchengröße nm 28
Stampfdichte nach DIN 53 194 g/l 80
Trocknungsverlust nach DIN 55 921 % 3
Glühverlust nach DIN 55 921 % 7
pH-Wert nach DIN 53200 7

**Patentanspüche**

1. Hydrophobe Füllstoff-Mischung, bestehend im ungetemperten Zustand aus:.
50 bis 85 Gew.-% auf pyrogenem Wege hergestellter Kieselsäure
5 bis 40 Gew.-%,vorzugsweise 5 bis 30 Gew.-% gefällter Kieselsäure
8 bis 30 Gew.-% Hydrophobierungsmittel.
0,5 bis 5 Gew.-% Aluminiumoxid

2. Verfahren zur Herstellung der hydrophoben Füllstoff-Mischung gemäß Anspruch 1 <u>dadurch gekennzeichnet</u>, daß man 8 bis 30 Teile Hydrophobierungsmittel mit 5 bis 40 Teilen gefällter Kieselsäure vermischt, 50 bis 85 Teile auf pyrogenem Wege hergestellte Kieselsäure hinzufügt; mischt, 0,5 bis 5,0 Teile Aluminiumdioxid hinzufügt, mischt, die so erhaltene Mischung 0,5 bis 3 Stunden bei 250 bis 330°C tempert und das so erhaltene Produkt auf ein Schüttgewicht von 80 bis 150 g/l verdichtet.

3. Verwendung der hydrophoben Füllstoff-Mischung gemäß Anspruch 1 als Füllstoff für RTV- oder LTV-Silikonkautschukmassen.

**0 025 096**

## Claims

Hydrophobic filler mixture, consisting in a nonheat treated state of:
from 50 to 85% by weight of silica produced by pyrogenic methods,
from 5 to 40% by weight, preferably from 5 to 30% by weight, of precipitated silica
from 8 to 30% by weight of a hydrophobising agent
from 0.5 to 5% by weight of aluminium oxide.

2. Process for the production of the hydrophobic filler mixture according to claim 1, characterised in that from 8 to 30 parts of hydrophobising agent are mixed with from 5 to 40 parts of precipitated silica, from 50 to 85 parts of silica produced by pyrogenic methods are added and mixed from 0.5 to 5.0 parts of aluminium oxide are added and mixed, the mixture thus obtained is heat treated for from 0.5 to 3 hours at from 250 to 330° C and the product thus obtained is compressed to a bulk density of from 80 to 150 g/l.

3. Use of the hydrophobic filler mixture according to claim 1 as filler for RTV or LTV silicone rubber compositions.


## Revendications

1) Composition de charge hydrophobe, constituée à l'état non échauffe de:
- 50 à 85 % en poids d'acide silicique préparé par pyrogénation,
- 5 à 40 % en poids, de préférence 5 à 30 % en poids d'acide silicique précipité,
- 8 à 30 % en poids d'agent hydrofuge,
- 0,5 à 5 % en poids d'oxyde d'aluminium.

2) Procédé pour la préparation de la composition de charge hydrophobe selon la revendication 1, caractérisé par le fait que l'on mélange 8 à 30 parties d'agent hydrofuge avec 5 à 40 parties d'acide silicique précipité, y ajoute 50 à 85 parties d'acide silicique préparé par pyrogénation, mélange, ajoute 0,5 à 5,0 parties d'oxyde d'aluminium, mélange, chauffe le mélange ainsi obtenu pendant 0,5 à 3 heures à une température de 250 à 330° C, et que l'on compacte le produit ainsi obtenu pour arriver à une densité apparente de 80 à 150 g/l.

3) Utilisation de la composition de charge hydrophobe selon la revendication 1, en tant que charge pour des masses de caoutchouc silicone RTV ou LTV.

10